Europäisches Patentamt

(19) European Patent Office

Office européen des brevets

(11) Veröffentlichungsnummer: **0 057 948**
**B1**

(12) **EUROPÄISCHE PATENTSCHRIFT**

(45) Veröffentlichungstag der Patentschrift:
27.11.85

(51) Int. Cl.⁴: **H 02 H 1/04,** H 02 H 3/48

(21) Anmeldenummer: **82200072.5**

(22) Anmeldetag: **21.01.82**

(54) **Verfahren zur Sicherung von elektrischen Netzen bei Pendelung mittels einer Pendelsperre und Pendelsperre zur Durchführung des Verfahrens.**

(30) Priorität: **11.02.81 CH 921/81**

(43) Veröffentlichungstag der Anmeldung:
**18.08.82 Patentblatt 82/33**

(45) Bekanntmachung des Hinweises auf die Patenterteilung:
**27.11.85 Patentblatt 85/48**

(84) Benannte Vertragsstaaten:
**CH DE FR LI NL**

(56) Entgegenhaltungen:
**FR - A - 2 067 708**

**REVUE GENERALE DE L'ELECTRICITE, Band 83, Nr. 2, Februar 1974 PARIS (FR) J.P. BARRET: "Quelques aspects du comportement des protections de distance contre les courts-circuits et les défauts d'isolement destinées aux réseaux THT", Seiten 89 bis 96**
**BROWN BOVERI REVIEW, Band 68, Februar 1981 BADEN (CH) F. ILAR: "Innovations in the Detection of Power Swings in Electrical Networks", Seiten 87 bis 93**

(73) Patentinhaber: **BBC Aktiengesellschaft Brown, Boveri & Cie., Haselstrasse, CH-5401 Baden (CH)**

(72) Erfinder: **Ilar, Franc, Dipl.-Ing., Ahornstrasse 19, CH-5442 Fislisbach (CH)**
Erfinder: **Metzger, Fridolin, Rehhalde 6, CH-4313 Möhlin (CH)**

## Beschreibung

Die vorliegende Erfindung bezieht sich auf ein Verfahren zur Sicherung von elektrischen Netzen bei Pendelung mittels einer Pendelsperre und auf eine Pendelsperre zur Durchführung des Verfahrens.

Bei Pendelungen bzw. Aussertrittfallen in elektrischen Netzen muss dafür gesorgt werden, dass keine Kurzschlussschutzrelais, insbesondere Distanzrelais, überzählig abschalten. Um dies zu sichern, werden Pendelsperren verwendet. In «Selektivschutz» von H. Neugebauer, Springer-Verlag, 1958, sind auf S. 118 und 119 einige Pendelsperren beschrieben. So z.B. wird eine Pendelsperre so realisiert, dass man den Unterschied zwischen den Ansprechzeiten zweier auf verschiedene Werte eingestellten Impedanzrelais als Pendelkriterium auswertet.

Der Nachteil dieser Lösung liegt darin, dass die Verwendung dieser Pendelsperre nicht möglich ist, wenn die Betriebsimpedanz nahezu gleich der Kurzschlussimpedanz ist. Diese Pendelsperre kann nicht unabhängig von der Form der Kennlinie der Schutzeinrichtung wirken.

Aus dem Artikel von J.-P. Barret «Quelques aspects du comportement des protections de distance contre les courts-circuits et les défauts d'isolement destinées aux réseaux THT» in Revue Générale de l'électricité, Band 83, Nr. 2, Februar 1974, insbesondere Absatz «Oscillations de puissance», S. 93–95 ist ein Verfahren zur Sicherung von elektrischen Netzen bei Pendelung mittels einer Pendelsperre bekannt, bei welchem die zeitliche Veränderung der Impedanz dauernd und unabhängig vom jeweiligen Impedanzwert überwacht wird. Hierbei wird geprüft, ob die zeitliche Veränderung der Impedanz zwischen dem Passieren einer festgelegten Grenzlinie und einer Anregekennlinie des Distanzrelais innerhalb einer vorgegebenen Zeitdifferenz erfolgt. Von Nachteil ist es hierbei insbesondere, dass dieses Verfahren von der Anregekennlinie der Pendelsperre abhängig ist.

Die Erfindung wie sie in den Ansprüchen angegeben ist, löst die Aufgabe, ein Verfahren der eingangs genannten Art und eine Pendelsperre zur Durchführung dieses Verfahrens zu schaffen, mit denen unabhängig von der Anregekennlinie eines Distanzrelais die zeitliche Veränderung einer durch Strom- und Spannungsmessung ermittelten elektrischen Grösse des Netzes, wie etwa der Impedanz, erfasst und ausgewertet wird.

Die Vorteile der vorliegenden Erfindung sind darin zu sehen, dass ein Verfahren der eingangs genannten Art und eine Pendelsperre geschaffen worden sind, die die elektrischen Netze bei Pendelungen in Zusammenarbeit mit beliebigem Kurzschlussschutzrelais ausreichend gegen Fehlauslösungen sichern. Die Pendelungen können jederzeit innerhalb anderthalb Periode erfasst und ausgewertet werden. Dadurch können die Kurzschlussschutzrelais auch bei hohen Schlupffrequenzen vor Fehlauslösungen abgesichert werden.

Die Erfindung ist anhand von zwei Beispielen der Pendelsperre näher erläutert, wobei auch weitere Vorteile der Erfindung erwähnt werden. Es zeigt:

Fig. 1 eine erste beispielsweise, erfindungsgemässe Pendelsperre, bei der die zeitliche Veränderung des ohmschen Widerstandes gemessen und ausgewertet wird, und

Fig. 2 eine zweite beispielsweise, erfindungsgemässe Pendelsperre, bei der die zeitliche Veränderung der Spannung, multipliziert mit dem Kosinus der Phasenverschiebung zwischen Strom und Spannung, verwendet wird.

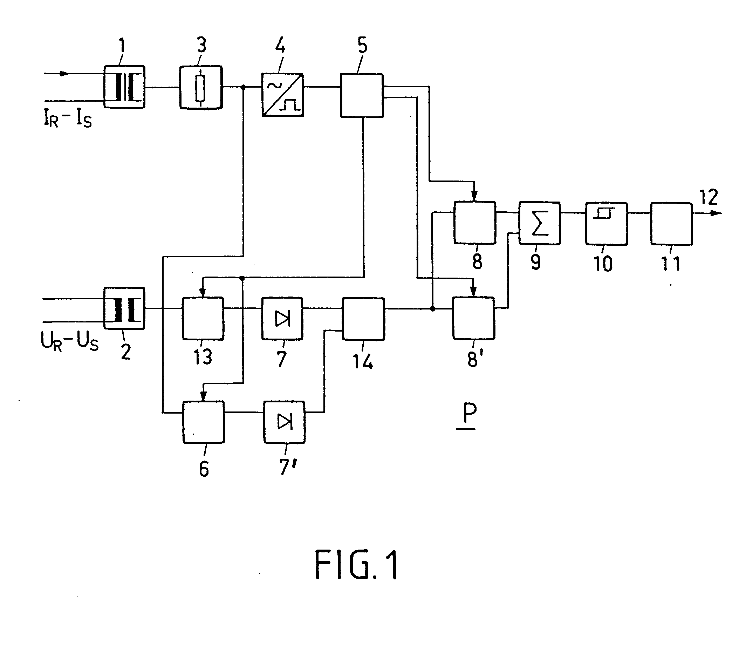

Gemäss Fig. 1 gelangt die Differenz zweier Phasenströme $I_R$-$I_S$ über einen Stromwandler 1 auf einen Shuntwiderstand 3. Der Stromwandler 1 dient zur galvanischen Trennung und der Shuntwiderstand 3 zur Gewinnung eines, dem Strom proportionalen Signals. Dieses Signal wird in dem Rechteckumformer 4 in ein Rechtecksignal umgewandelt, das der Steuervorrichtung 5 zugeführt wird. Dieses Signal bestimmt die zeitlichen Abstände der Nulldurchgänge des sinusförmigen Stromsignals. An den Shuntwiderstand 3 ist auch ein Integrator 6 zur Integration des Stromsignals angeschlossen. Die Differenz zweier Phasenspannungen $U_R$-$U_S$ gelangt über einen Spannungswandler 2, der zur galvanischen Trennung und Signalanpassung dient, an einen zweiten Integrator 13, der zur Integration des Spannungssignals verwendet wird. Die beiden Integratoren 6, 13 werden durch die Steuervorrichtung 5 so gesteuert, dass am Ausgang des ersten Integrators 6 ein Integral des Stromsignals zwischen zwei Stromnulldurchgängen und am Ausgang des zweiten Integrators 13 ein Integral des Spannungssignals zwischen zwei Stromnulldurchgängen entsteht. Die beiden Integrale werden in Gleichrichtern 7 und 7' gleichgerichtet, um für weitere Verarbeitung nur positive Signale zu erreichen. Das gleichgerichtete Integral des Stromsignals und das gleichgerichtete Integral des Spannungssignals werden einem Dividierer 14 zugeführt, an dessen Ausgang nach der Division des gleichgerichteten Integrals des Spannungssignals durch das gleichgerichtete Integral des Stromsignals ein dem ohmschen Widerstand proportionales Signal gebildet wird. Durch die Wirkung der Steuervorrichtung 5 wird das nach jedem Nulldurchgang des Stromsignals entstehende Signal am Ausgang des Dividierers 14 abwechslungsweise entweder von einem ersten Abtast- und Halteglied 8 oder von einem zweiten Abtast- und Halteglied 8' abgetastet und bis zur nächsten Abtastung gespeichert. Die Ausgangssignale der Abtast- und Halteglieder 8, 8' werden in einer Vorrichtung 9 zur Bildung einer Differenz so substrahiert, dass am Ausgang dieser Vorrichtung 9 die Differenz der Werte der zwei nacheinander folgenden gespeicherten Signale aus den Abtast- und Haltegliedern 8, 8' entsteht und einer Triggerschaltung 10 mit beidseitig begrenztem Ansprechbereich zugeführt wird. Am Ausgang dieser Triggerschaltung 10 wird ein positives, logisches Signal abgegeben, wenn die Differenz zwischen dem jeweils zuerst abgetasteten und dem nachfolgend abgetasteten Integralwert positiv ist und sich innerhalb eines vorgegebenen, beidseitig begrenzten Ansprechbereich befindet. Dies bedeutet, dass der ohmsche Widerstand abnimmt und die Grösse der Veränderung innerhalb eines beidseitig begrenzten Bereiches liegt. Mit einem Zähler 11 erreicht man, dass am Ausgang 12 der Pendelsperre P ein logisches Signal, das eine Pendelung bedeutet, erst dann erscheint, wenn die Triggerschaltung 10 innerhalb einer vorgegebenen Zeit, z.B. innerhalb einer Periode, zweimal nacheinander ein logisches Signal abgibt. Vorteil der Lösung gemäss Fig. 1 besteht darin, dass die zeitliche Veränderung des ohmschen Widerstandes erfasst wird, wobei diese Veränderung für eine Pendelung eine sehr charakterische Grösse ist.

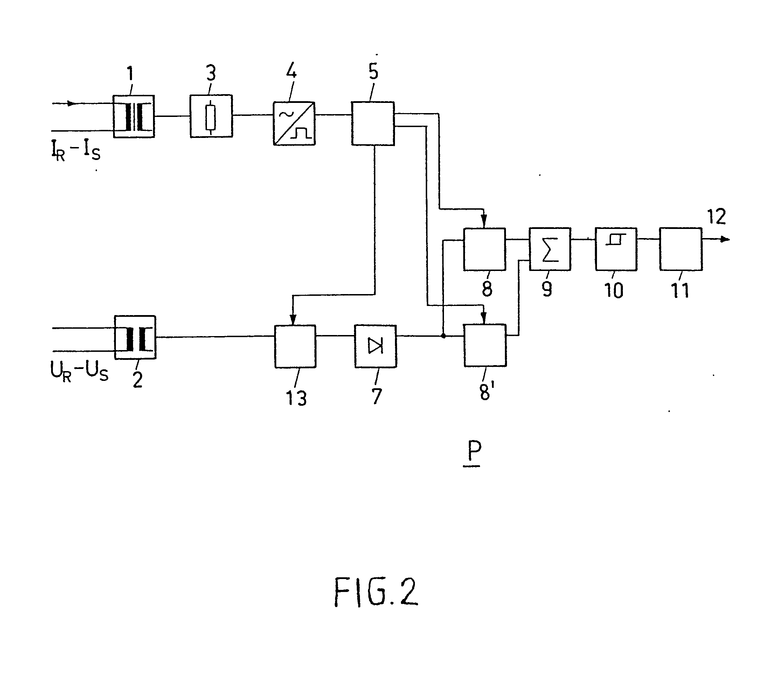

Gemäss Fig. 2 wird als die charakteristische Grösse die zeitliche Veränderung der Spannung, multipliziert mit dem Kosinus der Phasenverschiebung zwischen Strom und Spannung, verwendet. Die gleichen Teile in Fig. 2 entsprechen denjenigen gemäss Fig. 1. Ebenfalls die Funktionsweise der beiden Beispiele ist im wesentlichen ähnlich, mit der Ausnahme, dass der Integrator 6 mit dem nachgeschalteten Gleichrichter 7 und der Dividierer 14 gemäss Fig. 1 in der Fig. 2 ausgelassen sind, wobei durch die beiden Abtast- und Halteglieder 8, 8' direkt der Wert des gleichgerichteten Integrals des Spannungssignals zwischen zwei Stromnulldurchgängen abgetastet und gespeichert wird. Diese Ausführungsform ist konstruktiv einfacher und somit wirtschaftlicher.

## Patentansprüche

1. Verfahren zur Sicherung von elektrischen Netzen bei Pendelung mittels einer Pendelsperre (P), welche die zeitliche Veränderung einer mit dem Strom und der Spannung eines Netzes verbundenen elektrischen Grösse, wie der Impedanz, überwacht und auswertet, dadurch gekennzeichnet, dass nach jedem Nulldurchgang des Stromes ein der elektrischen Grösse zugeordnetes Signal gebildet und gespeichert wird, dass aufeinanderfolgend gespeicherte Signale voneinander subtrahiert werden und dass überwacht wird, ob die durch Subtraktion gebildeten Differenzsignale positiv sind und innerhalb eines beidseitig begrenzten Ansprechbereichs liegen.

2. Verfahren nach Anspruch 1, dadurch gekennzeichnet, dass die elektrische Grösse der ohmsche Widerstand ist.

3. Verfahren nach Anspruch 1, dadurch gekennzeichnet, dass die elektrische Grösse die Spannung multipliziert mit dem Kosinus der Phasenverschiebung zwischen Strom und Spannung ist.

4. Pendelsperre zur Durchführung des Verfahrens nach Anspruch 2, dadurch gekennzeichnet,
– dass der Strom zu einem Rechteckumformer (4) und einem einem ersten Gleichrichter (7') vorgeschalteten ersten Integrator (6) und die Spannung zu einem einem zweiten Gleichrichter (7) vorgeschalteten zweiten Integrator (13) geführt sind,
– dass den beiden Gleichrichtern (7, 7') ein Dividierer (14) nachgeschaltet ist,
– dass dem Rechteckumformer (4) eine Steuervorrichtung (5) nachgeschaltet ist, welche auf die beiden Integratoren (6, 13) und bei jedem Stromnulldurchgang abwechselnd auf eines von zwei in paralleler Anordnung dem Dividierer (14) nachgeschaltete Abtast- und Halteglieder (8, 8') wirkt,
– dass beide Abtast- und Halteglieder (8, 8') an eine Vorrichtung (9) zur Bildung des Differenzsignals angeschlossen sind, und
– dass der Vorrichtung (9) zur Bildung des Differenzsignals eine Triggerschaltung (10) mit einem beidseitig begrenzten Ansprechbereich sowie ein die im Ansprechbereich liegenden und aufeinanderfolgend auftretenden Differenzsignale addierender Zähler (11) nachgeschaltet sind (Fig. 1).

5. Pendelsperre zur Durchführung des Verfahrens nach Anspruch 3, dadurch gekennzeichnet,
– dass der Strom zu einem Rechteckumformer (4) und die Spannung zu einem einem Gleichrichter (7) vorgeschalteten Integrator (13) geführt sind,
– dass dem Rechteckumformer (4) eine Steuereinrichtung (5) nachgeschaltet ist, welche auf den Integrator (13) und bei jedem Stromnulldurchgang abwechselnd auf eines von zwei in paralleler Anordnung dem Gleichrichter (7) nachgeschaltete Abtast- und Halteglieder (8, 8') wirkt,
– dass beide Abtast- und Halteglieder (8, 8') an eine Vorrichtung (9) zur Bildung des Differenzsignals angeschlossen sind, und
– dass der Vorrichtung (9) zur Bildung des Differenzsignals eine Triggerschaltung (10) mit einem beidseitig begrenzten Ansprechbereich sowie ein die im Ansprechbereich liegenden und aufeinanderfolgend auftretenden Differenzsignale addierender Zähler (11) nachgeschaltet sind (Fig. 2).

## Claims

1. Method for safeguarding electric systems during phase swinging, using an out-of-step guard (P) which monitors and analyses the change with time of an electric quantity which is connected to the current and the voltage of a system, such as the impedance, characterised in that after each zero transition of the current, a signal, which is associated with the electric quantity, is formed and stored, that successively stored signals are subtracted from each other and that the difference signals formed by the subtraction are checked to see whether they are positive and fall within a response range which is limited on both sides.

2. Method according to Claim 1, characterised in that the electric quantity is the resistive impedance.

3. Method according to Claim 1, characterised in that the electric quantity is the voltage multiplied by the cosine of the phase shift between current and voltage.

4. Out-of-step guard for carrying out the method according to Claim 2, characterised in that
- the current is fed to a squarewave converter (4) and to a first integrator (6) which precedes a first rectifier (7') and the voltage is fed to a second integrator (13) which precedes a second rectifier (7),
- the two rectifiers (7, 7') are followed by a divider (14),
- the squarewave converter (4) is followed by a control device (5) which acts on the two integrators (6, 13) and, with each zero transition of the current, alternately on one of two sample- and hold sections (8, 8') which follow the divider (14) in parallel arrangement,
- both sample- and hold sections (8, 8') are connected to a device (9) for forming the difference signal, and
- the device (9) for forming the difference signal is followed by a trigger circuit (10) having a response range which is limited on both sides and by a counter (11) which adds the difference signals falling within the response range and occurring successively (Figure 1).

5. Out-of-step guard for carrying out the method according to Claim 3, characterised in that
- the current is fed to a squarewave converter (4) and the voltage is fed to an integrator (13) which precedes a rectifier (7),
- the squarewave converter (4) is followed by a control device (5) which acts on the integrator (13) and, at each zero transition of the current, alternately on one of two sample- and hold sections (8, 8') which follow the rectifier (7) in parallel arrangement,
- both sample- and hold sections (8, 8') are connected to a device (9) for forming the difference signal, and
- the device (9) for forming the difference signal is followed by a trigger circuit (10) having a response range which is limited on both sides and by a counter (11) which adds the difference signals falling within the response range and occurring successively (Figure 2).

**Revendications**

1. Procédé de protection de réseaux électriques lors d'un pompage au moyen d'un dispositif antipompage (P) qui surveille et évalue la variation dans le temps d'une grandeur électrique, comme l'impédance, liée à l'intensité et à la tension d'un réseau, caractérisé en ce qu'après chaque passage par zéro du courant, on forme un signal associé à la grandeur électrique et on le stocke, on soustrait l'un de l'autre des signaux stockés l'un à la suite de l'autre et on vérifie si les signaux de différence formés par soustraction sont positifs et se trouvent dans un domaine de réponse limité des deux côtés.

2. Procédé suivant la revendication 1, caractérisé en ce que la grandeur électrique est la résistance ohmique.

3. Procédé suivant la revendication 1, caractérisé en ce que la grandeur électrique multiplie la tension par le cosinus du décalage de phase entre l'intensité et la tension.

4. Dispositif antipompage pour l'exécution du procédé suivant la revendication 2, caractérisé en ce que,
- le courant est amené à un conformateur d'ondes rectangulaires (4) et à un premier intégrateur (6) premier redresseur (7') et la tension est amenée à un second intégrateur (13) précédant un second redresseur (7),
- les deux redresseurs (7, 7') sont suivis d'un diviseur (14),
- le conformateur d'ondes rectangulaires (4) est suivi d'un dispositif de commande (5) qui agit sur les deux intégrateurs (6, 13) et à chaque passage par zéro du courant, en alternance sur l'un de deux éléments d'analyse et de retenue (8, 8') montés en parallèle en aval du diviseur (14),
- les deux éléments d'analyse et de retenue (8, 8') sont connectés à un dispositif (9) destiné à former le signal de différence, et
- le dispositif (9) destiné à former le signal de différence est suivi d'un circuit de déclenchement (10) présentant un domaine de réponse limité des deux côtés ainsi que d'un compteur (2) additionnant les signaux de différence se trouvant dans le domaine de réponse qui se suivent (Fig. 1).

5. Dispositif antipompage pour l'exécution du procédé suivant la revendication 3, caractérisé en ce que,
- le courant est appliqué à un conformateur d'ondes rectangulaires (4) et la tension à un intégrateur (13) précédant un redresseur (7),
- le conformateur d'ondes rectangulaires (4) est suivi d'un dispositif de commande (5) qui agit sur l'intégrateur (13) et à chaque passage par zéro du courant, en alternance sur l'un de deux éléments d'analyse et de retenue (8, 8') montés en parallèle en aval du redresseur (7),
- les deux éléments d'analyse et de retenue (8, 8') sont connectés à un dispositif (9) pour former le signal de différence, et
- le dispositif (9) pour former le signal de différence est suivi d'un circuit de déclenchement (10) présentant un domaine de réponse limité des deux côtés ainsi que d'un compteur (11) additionnant des signaux de différence se trouvant dans le domaine de réponse qui se suivent (Fig. 2).

$I_R - I_S$

$U_R - U_S$

$\underline{P}$

FIG. 1

FIG.2